# EUROPEAN PATENT APPLICATION

(11) **EP 3 059 329 A1**
(43) Date of publication of application: **24.08.2016**
(21) Application number: 14854426.5
(22) Date of filing: 14.10.2014
(51) Int. Cl.: C22C 21/00, B23K 1/00, B23K 1/19, C23F 13/00, F25B 39/00, F28F 9/02, F28F 19/06, F28F 21/08, C22F 1/00, C22F 1/04

(54) **ALUMINUM ALLOY HEAT EXCHANGER**

(30) Priority: 15.10.2013 JP 2013214921
(71) Applicant: UACJ Corporation, Tokyo 100-0004 (JP)
(72) Inventor: KANNO, Yoshimasa, Tokyo 100-0004 (JP); ICHINOSE, Akira, Tokyo 100-0004 (JP); OYA, Yoshiyuki, Tokyo 100-0004 (JP)
(74) Representative: Eisenführ Speiser
(86) International application number: PCT/JP2014/077323
(87) International publication number: WO 2015/056669

(57) **Abstract**

Provided is an aluminum alloy heat exchanger which has excellent corrosion resistance on a brazed portion and is suitable for applications to air conditioners and the like. A header pipe is composed of an aluminum alloy cladding material comprising an aluminum alloy core material and a sacrificial anode material for cladding at least one side of the core material. A core material contains Mn: 0.3-2.0 mass% (hereinafter, abbreviated to %), Si: 1.5% or less, Fe: 0.1-1.0% and Cu: 0.05-1.0%, and comprises a remainder Al and unavoidable impurities, and the sacrificial anode material contains Fe: 0.05-1.0% and Zn: 0.5-5.0%, and comprises a remainder Al and unavoidable impurities. A potential at the joint section between the header pipe and the tube is lower by 30 mV or less than potentials at the header pipe surface and the tube surface, and the potential at the joint section is lower by 30-100 mV than a potential at a position in a depth of one quarter of the overall thickness from the header pipe surface and a potential at a position in a depth of one quarter of the overall thickness from the tube surface.

## Description

### TECHNICAL FIELD

The present invention relates to an aluminum alloy heat exchanger which is manufactured by brazing using a formed aluminum alloy cladding material, has excellent corrosion resistance on a brazed portion and is suitable for applications to air conditioners and the like.

### BACKGROUND ART

Aluminum alloys are light and highly thermal conductive and can achieve high corrosion resistance by proper treatment, and thus they are used for heat exchangers for air conditioners and automobiles. Recently, for technical advancement or environmental response for automobiles, better performance of heat exchangers are called for with respect to weight reduction and high durability, and Al alloy material technologies capable of address these problems are required. As an embodiment of such an aluminum alloy heat exchanger, heat exchangers are currently used in which an extruded flat tube or a bent brazing sheet tube is combined with an outer fin obtained by corrugating a fin material, furthermore both ends of the tube are inserted into header pipes obtained by forming a cladding material into a cylindrical shape, and these components are joined by brazing.

In addition, since air-conditioners are placed under very stringent corrosive environment with a considerable temperature difference between low-temperature cold air for cooling and indoor high-temperature hot air, technologies for further improving the corrosion resistance are required. Hence, besides weight reduction and durability, the corrosion resistance is required for an aluminum alloy used as a heat exchanger, and sacrificial anticorrosion is effected by generating a potential difference on a brazing material (sacrificial anode material) or between a brazing material (sacrificial anode material) and a core material in such a way that a Zn-containing Al-Zn alloy or a braze-functionalized Al-Si-Zn alloy is placed on surfaces contacting a corrosive environment for the tube and the header pipe.

As described above, corrosion resistance of the tubes and the header pipes has been improved, but recently there have been problems of leakage due to preferential corrosion on the tube and header pipe joint sections. In a course of junction of the tube and the header pipe by braze heating, Zn with a less-noble potential contained in the sacrificial anode materials of the tube and the header is diffused into the joint section, and the potential of the joint section becomes lower than that of the sacrificial anode materials of the tube and the header pipe, resulting in preferential corrosion on the joint section. Thus, the potential constitution should be adjusted by also diffusing an element with a higher potential into the joint section.

In relation to the problem of corrosion on this joint section, methods of improving the corrosion resistance of the joint section between the tube and the header pipe have been disclosed.

Patent Document 1 discloses a method of manufacturing a heat exchanger in which a potential of a tube surface is relatively lower by 20 mV or more than that of a joint section. However, although preferential corrosion could be suppressed by including an area with a potential of which is lower than that of the joint section in this heat exchanger, diffusion of Zn contained in a header pipe into the joint side and a potential at the header pipe are not considered so that there is a possibility that the joint section is preferentially corroded when the potential of the joint section is lower than that of the header pipe.

On the other hand, Patent Document 2 describes that potentials of a header pipe surface and a joint section are made to be lower by 30 mV or more than that of a tube core material, and a potential difference between the tube core material and the header pipe core material is made to be within 30 mV so that a sacrificial anticorrosive effect of the tube is improved. However, Patent document 2 does not describe preferential corrosion of the joint section, and thus there is a possibility that corrosive leakage on the joint section is caused prior to that on the tube.

### PRIOR ART DOCUMENTS

### PATENT DOCUMENT

Patent Document 1: JP 2009-139052 A
Patent Document 2: JP 2011-42853 A

### SUMMARY OF THE INVENTION

### PROBLEMS TO BE SOLVED

The present invention was made in light of the above-described circumstances, and is intended to provide an aluminum alloy heat exchanger in which a tube, a fin and a header pipe are joined by brazing, corrosion resistance in particular on the brazed portion is excellent, and it is suitable for applications to air conditioners and the like.

### SOLUTION TO PROBLEM

In order to solve the problems, the inventors studied influences of constitutional combinations of the tube and the header pipe on corrosion resistance in detail. As a result, the inventors found that, on the joint section between the tube and the header pipe, a pitting potential at the joint section was made higher than that of the surface layer of the tube and the header pipe by diffusing Zn contained in the sacrificial anode materials of the tube and the header and Cu contained in the core material into the joint section, and thereby preferential corrosion on the joint section could be suppressed to improve the corrosion resistance of the brazed portion. Furthermore, the inventor found that the lifespan of the heat exchanger could be remarkably improved by achieving the sacrificial anticorrosive effects of both the tube and the header pipe. The present invention was made on the basis of these findings.

That means, the aluminum alloy heat exchanger of the present invention is a heat exchanger in which a plurality of tubes comprising fluid passages therein are arranged in parallel to each other, a corrugated fin is sandwiched between the adjacent tubes, header pipes are arranged on both ends of the tubes, and the tubes, the fins and the header pipes are integrated by brazing, wherein:
the header pipe is composed of an aluminum alloy cladding material comprising an aluminum alloy core material and a sacrificial anode material for cladding at least one side of the core material;
the core material contains Mn: 0.3-2.0 mass% (hereinafter, abbreviated to %), Si: 1.5% or less, Fe: 0.1-1.0% and Cu: 0.05-1.0%, and comprises a remainder Al and unavoidable impurities;
the sacrificial anode material contains Fe: 0.05-1.0% and Zn: 0.5-5.0%, and comprises a remainder Al and unavoidable impurities;
a potential at the joint section between the header pipe and the tube is lower by 30 mV or less than potentials at the header pipe surface and the tube surface; and
the potential of the joint section is lower by 30-100 mV than a potential of a position in a depth of one quarter of the overall thickness from the header pipe surface and a potential at a position in a depth of one quarter of the overall thickness from the tube surface.

### ADVANTAGEOUS EFFECTS OF INVENTION

According to the present invention, an aluminum alloy heat exchanger which has excellent corrosion resistance on the brazed portion and is suitable for applications to air conditioners and the like can be provided.

### BRIEF DESCRIPTION OF DRAWINGS

Fig. 1 is a schematic view of a structure of an aluminum alloy heat exchanger according to an embodiment of the present invention.
Fig. 2 is an enlarged cross-sectional view of a part A in Fig. 1.
Fig. 3 is an enlarged cross-sectional view of the part A of the aluminum alloy heat exchanger according to the other embodiment of the present invention.

### DESCRIPTION OF EMBODIMENTS

Hereinafter, the aluminum alloy heat exchanger according to embodiments of the present invention will be explained in detail.

### 1. Structure of heat exchanger

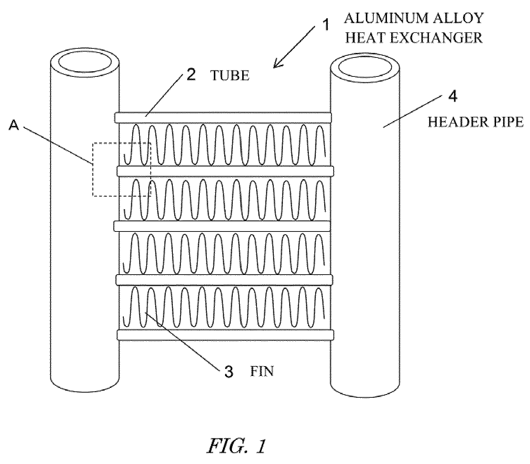

The structure of the aluminum alloy heat exchanger according to an embodiment of the present invention is shown in Fig. 1.

In the aluminum alloy heat exchanger 1, a plurality of tubes 2 housing fluid passages are arranged in parallel to each other, a corrugated fin 3 is sandwiched and joined between the adjacent tubes 2, and header pipes 4 are integrated to both ends of the tubes 2 by brazing.

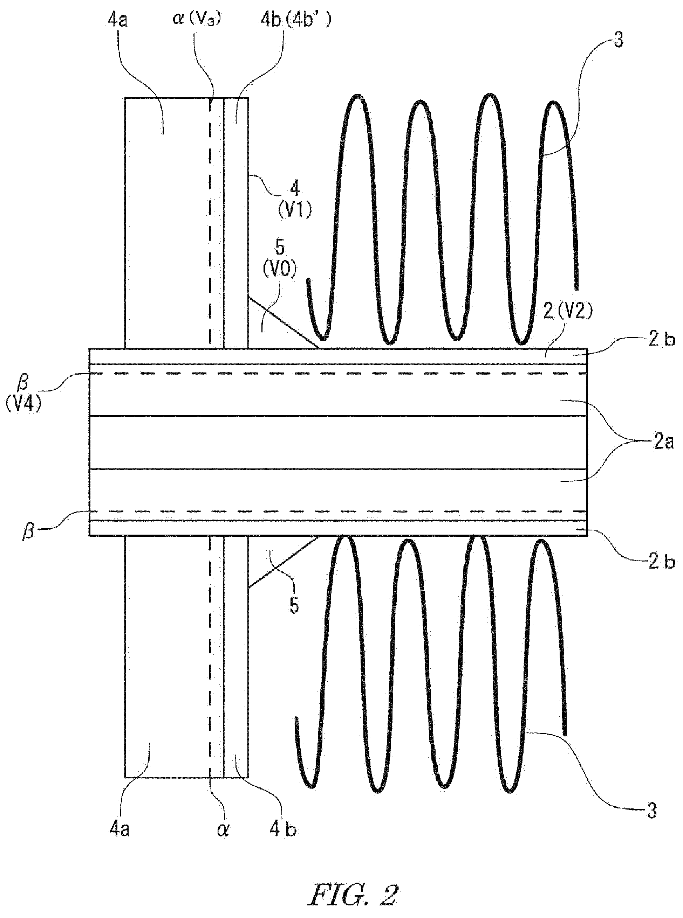

The enlarged cross-sectional view of the part A in Fig. 1 is shown in Fig. 2.

The header pipe 4 is composed of a header pipe core material 4a and a header pipe sacrificial anode material 4b for cladding its surface, the tube 2 is composed of a tube core material 2a and a tube braze-functionalized sacrificial anode material 2b for cladding its surface. In addition, a joint section 5 is formed on a surface part where the header pipe sacrificial anode material 4b and the tube braze-functionalized sacrificial anode material 2b cross each other. A face in a depth of one quarter of the overall thickness from the surface of the header pipe 4 is designated as α, and a face in a depth of one quarter of the overall thickness from the surface of the tube 2 is designated as β. It should be noted that in this figure, although the layer for cladding the surface of the header pipe core material 4a is designated as the header pipe sacrificial anode material 4b, a header pipe braze-functionalized sacrificial anode material 4b' can be alternatively used.

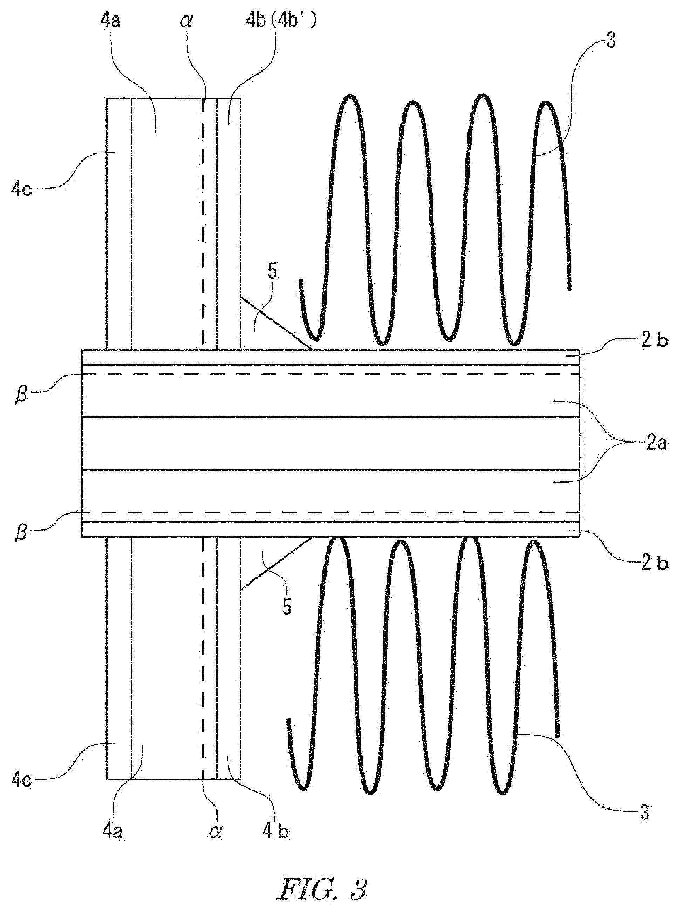

The enlarged cross-sectional view of the part A of the aluminum alloy heat exchanger according to the other embodiment of the present invention is shown in Fig. 3. The surface of the header pipe core material 4a on a side opposite to the face cladded with the header pipe sacrificial anode material 4b can also be cladded with a header pipe brazing material 4c as in this case. Hereinafter, each component in the heat exchangers shown in Figs. 2 and 3 will be explained in detail.

### 2. Composition of the header pipe core material 4a

For the header pipe core material 4a of the header pipe 4 in the aluminum alloy heat exchanger 1 according to the present invention, an aluminum alloy containing Mn: 0.3-2.0 mass% (hereinafter, abbreviated to %), Si: 1.5% or less, Fe: 0.1-1.0% and Cu: 0.05-1.0% and comprising a remainder Al and unavoidable impurities is used.

### (Si: 1.5% or less)

Si forms an Al-Mn-Si intermetallic compound together with Mn, and improves the strength by dispersion strengthening or by solute strengthening through solution in an aluminum parent phase. An Si content is 1.5% or less. When its content is more than 1.5%, a melting point of the core material is lowered, resulting in high possibility of melting. In addition, the less the amount of the added Si is, the higher the effects to suppress coarsening of the crystal grain and improve forming processability are. In a case of complex forming, there is no need to add Si, but since Si is unavoidably contained, 0.05% or more of Si is contained. The Si content is preferably 0.1 to 1.0%.

### (Fe: 0.1-1.0%)

Fe crystallizes or deposits as an intermetallic compound to improve the strength of the core material. In addition, Fe can form Al-Mn-Fe, Al-Fe-Si and Al-Mn-Si-Fe compound phases and lower solid solubilities of Mn and Si in the matrix to rise the melting point of the matrix. The Fe content is 0.1-1.0%. When the Fe content is less than 0.1%, its effect is small. On the other hand, when it is more than 1.0%, its castability and rollability are lowered by creation of huge crystallized matters. The Fe content is preferably 0.1-0.3%.

### (Mn: 0.3-2.0%)

Mn forms an Al-Mn-Si intermetallic compound together with Si, and improves the strength by dispersion strengthening or by solute strengthening through solution in an aluminum parent phase. An Mn content is 0.3-2.0%. When its content is less than 0.3%, the effect is insufficient, and when it is more than 2.0%, a huge intermetallic compound is likely to be formed in casting, resulting in lowered plastic workability. The Mn content is preferably 0.8-1.8%.

### (Cu: 0.05-1.0%)

Cu improves the strength by solute strengthening. In addition, Cu increases a potential at the core material and widens a potential difference with a brazing material to improve sacrificial anticorrosive effects between the core material and the brazing material. Furthermore, in the heat exchanger, Cu contained in the header pipe and the tube is diffused into the joint section in the course of braze heating to increase a potential at the joint section, thereby Cu exhibits effects to suppress preferential corrosion by less-ennobling of the potential at the joint section and to improve the corrosion life of the whole heat exchanger. A Cu content is 0.05-1.0%. When its content is less than 0.05%, the effect is insufficient, and when it is more than 1.0%, an aluminum alloy is likely to crack in casting. The Cu content is preferably 0.1-0.6%.

### (Selective additive element)

In addition, the header pipe core material 4a used for the present invention may further contain one or more selected from Mg: 0.1-1.0%, Ti: 0.05-0.3%, Zr: 0.05-0.3%, Cr: 0.05-0.3%, and V: 0.05-0.3% as selective additive elements.

Mg has an effect to improve the strength of the core material. An Mg content is preferably 0.1-1.0%. When the Mg content is less than 0.1%, its effect is small. On the other hand, when it is more than 1.0%, a potential at the core material becomes lower so that a potential gradient with respect to the brazing material cannot be obtained, and the sacrificial anticorrosive effect of the brazing material is damaged, resulting in decreased corrosion resistance of the core material. The Mg content is preferably 0.1-0.5%.

Ti improves the strength by solute strengthening. A Ti content is preferably 0.05-0.3%. When its content is less than 0.05%, the effect may be insufficient, and when it is more than 0.3%, a huge intermetallic compound is likely to be formed, and the plastic workability may be lowered. The Ti content is more preferably 0.1-0.2%.

Zr improves the strength by solute strengthening, and acts on coarsening of the crystal grain after brazing by deposition of the Al-Zr intermetallic compounds. A Zr content is preferably 0.05-0.3%. When it is less than 0.05%, the effect may not be obtained. When it is more than 0.3%, a huge intermetallic compound is likely to be formed, and the plastic workability may be lowered. The Zr content is more preferably 0.1-0.2%.

Cr improves the strength by solute strengthening, and acts on coarsening of the crystal grain after brazing by deposition of the Al-Cr intermetallic compounds. A Cr content is preferably 0.05-0.3%. When it is less than 0.05%, the effect may not be obtained. When it is more than 0.3%, a huge intermetallic compound is likely to be formed, and the plastic workability may be lowered. The Cr content is more preferably 0.1-0.2%.

V improves the strength by solute strengthening, and also improves corrosion resistance. A V content is preferably 0.05-0.3%. When it is less than 0.05%, the effect may not be obtained. When it is more than 0.3%, a huge intermetallic compound is likely to be formed, and the plastic workability may be lowered. The V content is more preferably 0.1-0.2%.

### 3. Header pipe sacrificial anode material 4b, and header pipe braze-functionalized sacrificial anode material 4b'

The header pipe sacrificial anode material 4b has an effect to improve a corrosion life of the header pipe 4 by cladding the core material of the header pipe 4 with 4b as a skin material so that the header pipe sacrificial anode material 4b is preferentially corroded under a corrosive environment and corrosion of the core material is suppressed. In addition, the header pipe braze-functionalized sacrificial anode material 4b' has not only the effect of the sacrificial anode material but also a function as a brazing filler used for junction by brazing, and the skin material unmelted after brazing acts as the sacrificial anode material.

The brazing filler of the header pipe braze-functionalized sacrificial anode material 4b' in the header pipe 4 is used mainly for junction with tube 2. In a case that more brazing fillers are required depending on the size of the heat exchanger, the number of the tube 2 and the like, or in application for improving the joining property, etc., a cladding material obtained by cladding the header pipe core material 4a with the header pipe sacrificial anode material 4b or the header pipe braze-functionalized sacrificial anode material 4b' is used as a header pipe 4.

For the header pipe sacrificial anode material 4b, an aluminum alloy containing Fe: 0.05-1.0% and Zn: 0.5-5.0% and comprising a remainder Al and unavoidable impurities is used.

With respect to a cladding ratio for the sacrificial anode material 4b or the braze-functionalized sacrificial anode material 4b' for cladding the header pipe core material 4a, a cladding ratio enough for obtaining sufficient sacrificial braze performance and anticorrosive effects is required. When the cladding ratio is too low, it is likely that joining property is lowered due to shortage of the brazing filler in brazing, and the sacrificial anticorrosive effect is decreased. When the cladding ratio is too high, the core material is likely to melt because the melted brazing filler is increased. Thus, the cladding ratios of the sacrificial anode material, the braze-functionalized sacrificial anode material and the brazing material are desirably 8-20%.

### (Zn: 0.5-5.0%)

Zn can decrease a potential and generate a potential difference with respect to the core material to improve the corrosion resistance by the sacrificial anode effect. Furthermore, in the heat exchanger, Zn contained in the header pipe and the tube is diffused into the joint section in the course of braze heating to decrease the potential of the joint section, and thereby an effect to reduce corrosion of the core materials of the header pipe and the tube is generated. A Zn content is 0.5-5.0%. When it is less than 0.5%, the effect to improve the corrosion resistance by the sacrificial anode effect is insufficient. On the other hand, it is more than 5.0%, the corrosion rate is increased, the sacrificial anode material disappears early, resulting in decreased corrosion resistance. Furthermore, the amount of Zn diffused on the joint section in braze heating is increased, and a potential at the joint section becomes remarkably lower so that preferential corrosion of the joint section is enhanced to cause leakage on the joint section with corrosion. The Zn content is preferably 1.0-4.0%.

### (Fe: 0.05-1.0%)

Fe forms an Al-Fe-Mn-Si compound together with Si and Mn, and improves the strength by dispersion strengthening. An amount of the added Fe is 0.05-1.0%. When its content is less than 0.05%, a high-purity aluminum base metal must be used, resulting in high cost. On the other hand, when it is more than 1.0%, a huge intermetallic compound is likely to be formed in casting, resulting in lowered plastic workability. Furthermore, for the header pipe braze-functionalized sacrificial anode material 4b', when the Fe content is more than 1.0%, flowability of the brazing filler in brazing is lowered due to formation of an Al-Fe and Al-Fe-Si compounds, and braze performance is inhibited. The Fe content is preferably 0.05-0.5%.

For the header pipe braze-functionalized sacrificial anode material 4b', an aluminum alloy containing Si: 2.5-15.0%, Fe: 0.05-1.0%, Zn: 0.5-5.0% and a remainder composed of a remainder Al and unavoidable impurities is used.

### (Si: 2.5-15.0%)

Addition of Si causes a liquid phase due to a lowered melting point of the sacrificial anode material, which allows brazing. An Si content is 2.5-15.0%. When it is less than 2.5%, the amount of the caused liquid phase is small, and thus outer brazing hardly functions. On the other hand, when it is more than 15.0%, the amount of the liquid phase caused in braze heating is excessively increased, and the sacrificial anode material part present as a remaining solid phase is decreased, resulting in decreased corrosion resistance. The Si content is preferably 4.0-12.0%.

### (Zn: 0.5-5.0%)

Zn can make a potential lower and generate a potential difference with respect to the core material to improve the corrosion resistance by the sacrificial anode effect. Furthermore, in the heat exchanger, Zn contained in the header pipe and the tube is diffused into the joint section in the course of braze heating to make the potential lower at the joint section, and thereby an effect to reduce corrosion of the core materials of the header pipe and the tube is generated. A Zn content is 0.5-5.0%. When it is less than 0.5%, the effect to improve the corrosion resistance by the sacrificial anode effect is insufficient. On the other hand, it is more than 5.0%, the corrosion rate is increased, the sacrificial anode material disappears early, resulting in decreased corrosion resistance. Furthermore, the amount of Zn diffused into the joint section in braze heating is increased, and a potential at the joint section becomes remarkably lower so that preferential corrosion of the joint section is enhanced to cause corrosive leakage on the joint section. The Zn content is preferably 1.0-4.0%.

### (Fe: 0.05-1.0%)

Fe forms an Al-Fe-Mn-Si compound together with Si and Mn, and improves the strength by dispersion strengthening. An amount of the added Fe is 0.05-1.0%. When its content is less than 0.05%, a high-purity aluminum base metal must be used, resulting in high cost. On the other hand, it is more than 1.0%, a huge intermetallic compound is likely to be formed in casting, resulting in lowered plastic workability. Furthermore, for the header pipe braze-functionalized sacrificial anode material 4b', when the Fe content is more than 1.0%, flowability of the brazing filler in brazing is lowered due to formation of an Al-Fe and Al-Fe-Si compounds, and braze performance is inhibited. The Fe content is preferably 0.05-0.5%.

### (Selective additive element)

In addition, the header pipe sacrificial anode material 4b or the header pipe braze-functionalized sacrificial anode material 4b' used for the present invention may further contain one or more selected from 0.05-1.0% of Mn, 0.05-0.3% of Ti, 0.05-0.3% of Zr, 0.05-0.3% of Cr, 0.05-0.3% of V, 0.001-0.05% of Na and 0.001-0.05% of Sr as selective additive elements.

Since Mn improves strength and corrosion resistance, it is preferable that Mn is contained. An Mn content is preferably 0.05-1.0%. When it is more than 1.0%, a huge intermetallic compound is likely to be formed in casting, and thereby the plastic workability may be lowered. In addition, since Mn increases the potential at the sacrificial anode material, it inhibits the sacrificial anode effect, and thereby the corrosion resistance may be decreased. On the other hand, when its content is less than 0.05%, the effect may be insufficient. The Mn content is preferably 0.1-0.5%.

Ti improves the corrosion resistance as well as the strength by solute strengthening. A Ti content is preferably 0.05-0.3%. When it is less than 0.05%, the effect may not be obtained. When it is more than 0.3%, the huge intermetallic compound is likely to be formed, and the plastic workability may be lowered. The Ti content is more preferably 0.1-0.2%.

Zr improves the strength by solute strengthening, and acts on coarsening of the crystal grain after brazing by deposition of the Al-Zr intermetallic compounds. A Zr content is preferably 0.05-0.3%. The Zr content is preferably 0.05-0.3%. When it is less than 0.05%, the effect may not be obtained. When it is more than 0.3%, a huge intermetallic compound is likely to be formed, and the plastic workability may be lowered. The Zr content is more preferably 0.1-0.2%.

Cr improves the strength by solute strengthening, and acts on coarsening of the crystal grain after brazing by deposition of the Al-Cr intermetallic compounds. A Cr content is preferably 0.05-0.3%. When it is less than 0.05%, the effect may not be obtained. When it is more than 0.3%, a huge intermetallic compound is likely to be formed, and the plastic workability may be lowered. The Cr content is more preferably 0.1-0.2%.

V improves the strength by solute strengthening, and also improves corrosion resistance. A V content is preferably 0.05-0.3%. When it is less than 0.05%, the effect may not be obtained. When it is more than 0.3%, a huge intermetallic compound is likely to be formed, and the plastic workability may be lowered. The V content is more preferably 0.1-0.2%.

Na and Sr are added to the skin material of the Al-Si brazing filler, thereby the size of the Si particles in the Al-Si brazing material is finely and uniformly dispersed to control development of coarse Si particles, and thus local melting and erosion on the joint sections with the core material of the Al-Si brazing material and the fin are suppressed. When Na and Sr contents are less than 0.001%, the effect cannot be sufficiently obtained. On the other hand, when it is more than 0.05%, oxidation of the brazing filler progresses in braze heating, resulting in lowered braze flowability and braze performance. Consequently, the Na and Sr contents are preferably 0.001-0.05%, more preferably 0.005-0.015%.

### 4. Header pipe brazing material 4c

In the header pipe 4 of the aluminum alloy cladding material, in order to improve joining property of the tube 2 or the like, the header pipe core material 4a on the side opposite to the surface on which the header pipe core material 4a is cladded with the header pipe sacrificial anode material 4b or the header pipe braze-functionalized sacrificial anode material 4b' is cladded with the header pipe brazing material 4c for use.

In relation to a cladding ratio of the brazing material 4c for cladding the header pipe core material 4a, a cladding ratio enough for obtaining sufficient sacrificial braze performance and anticorrosive effects is required. When the cladding ratio is too low, it is likely that joining property is lowered due to shortage of the brazing filler in brazing, and the sacrificial anticorrosive effect is decreased. When the cladding ratio is too high, the core material is likely to melt because the melted brazing filler is increased. Thus, the cladding ratios of the sacrificial anode material, the braze-functionalized sacrificial anode material and the brazing material are desirably 8-20%.

For the header pipe brazing material 4c, an aluminum alloy containing Si: 2.5-15% and Fe: 0.05-1.0% and comprising a remainder Al and unavoidable impurities is used.

### (Si: 2.5-15%)

Si lowers a melting point to cause a liquid phase, which allows brazing. An Si content is 2.5-15%. When it is less than 2.5%, the amount of the caused liquid phase is small, and thus brazing hardly functions. On the other hand, when it is more than 15%, the amount of Si diffused into the subject material e.g. a tube is excessively increased, resulting in melting of the subject material. The Si content is preferably 4.0-12%.

### (Fe: 0.05-1.0%)

Fe is likely to form Al-Fe and Al-Fe-Si compounds. The effective amount of Si in the brazing material is decreased by formation of the Al-Fe-Si compound, and the flowability of the brazing filler in brazing is lowered by formation of the Al-Fe and Al-Fe-Si compounds, and thereby the braze performance is inhibited. An Fe content is 0.05-1.0%. When the Fe content is more than 1.0%, the braze performance is inhibited as mentioned above, resulting in insufficient brazing. On the other hand, the Fe content is less than 0.05%, a high-purity aluminum base metal must be used, resulting in high cost. The Fe content is preferably 0.1-0.5%.

### (Selective additive element)

In addition, the brazing material used for the present invention may further contain one or more selected from 0.05-1.0% of Mn, 0.05-0.3% of Ti, 0.05-0.3% of Zr, 0.05-0.3% of Cr, 0.05-0.3% of V, 0.001-0.05% of Na and 0.001-0.05% of Sr as selective additive elements.

It is preferable that Mn is contained because it improves strength and corrosion resistance. An Mn content is preferably 0.05-1.0%. When it is more than 1.0%, a huge intermetallic compound is likely to be formed in casting, and thereby the plastic workability may be lowered. In addition, since Mn increases the potential at the sacrificial anode material, it inhibits the sacrificial anode effect, and thereby the corrosion resistance may be decreased. On the other hand, when its content is less than 0.05%, the effect may be insufficient. The Mn content is more preferably 0.1-0.5%.

Ti improves the corrosion resistance as well as the strength by solute strengthening. A Ti content is preferably 0.05-0.3%. When it is less than 0.05%, the effect may not be obtained. When it is more than 0.3%, the huge intermetallic compound is likely to be formed, and the plastic workability may be lowered. The Ti content is more preferably 0.1-0.2%.

Zr improves the strength by solute strengthening, and acts on coarsening of the crystal grain after brazing by deposition of the Al-Zr intermetallic compounds. Zr content is preferably 0.05-0.3%. When it is less than 0.05%, the effect may not be obtained. When it is more than 0.3%, a huge intermetallic compound is likely to be formed, and the plastic workability may be lowered. The Zr content is more preferably 0.1-0.2%.

Cr improves the strength by solute strengthening, and acts on coarsening of the crystal grain after brazing by deposition of the Al-Cr intermetallic compounds. A Cr content is preferably 0.05-0.3%. When it is less than 0.05%, the effect may not be obtained. When it is more than 0.3%, a huge intermetallic compound is likely to be formed, and the plastic workability may be lowered. The Cr content is more preferably 0.1-0.2%.

V improves the strength by solute strengthening, and also improves corrosion resistance. A V content is preferably 0.05-0.3%. When it is less than 0.05%, the effect may not be obtained. When it is more than 0.3%, a huge intermetallic compound is likely to be formed, and the plastic workability may be lowered. The V content is more preferably 0.1-0.2%.

Na and Sr are added to the skin material of the Al-Si brazing filler, thereby the size of the Si particles in the Al-Si brazing material is finely and uniformly dispersed to control development of coarse Si particles, and thus a local melting and erosion on the joint section with the core material of the Al-Si brazing material and the fin are suppressed. When Na and Sr contents are less than 0.001%, the above-described effect cannot be sufficiently obtained. On the other hand, when it is more than 0.05%, oxidation of the brazing filler progresses in braze heating, resulting in lowered braze flowability and braze performance. Consequently, the Na and Sr contents are preferably 0.001-0.05%, more preferably 0.005-0.015%.

### 5. Tube core material 2a

The tube 2 of the aluminum alloy heat exchanger 1 according to the present invention is used through forming into a tube shape by bending a cladding material in which an extruded material or the plate-like tube core material 2a is cladded with a brazing material, a sacrificial anode material or the tube braze-functionalized sacrificial anode material 2b as a skin material by bending work.

For the tube core material 2a, an aluminum alloy containing 0.5-2.0% of Mn, 1.5% or less of Si, 0.1-1.0% of Fe and 0.1-1.0% of Cu and comprising a remainder Al and unavoidable impurities is used.

### (Si: 1.5% or less)

Si forms an Al-Mn-Si intermetallic compound together with Mn, and improves the strength by dispersion strengthening or by solute strengthening through solution in an aluminum parent phase. An Si content is 1.5% or less. When its content is more than 1.5%, a melting point of the core material is lowered, resulting high possibility of melting. The Si content is preferably 0.1-1.0%. In addition, the less the amount of the added Si is, the higher the effects to suppress coarsening of the crystal grain and improve forming processability are. When complex forming is required, there is no need to add Si.

### (Fe: 0.1-1.0%)

Fe crystallizes or deposits as an intermetallic compound to improve the strength of the core material. In addition, Fe can form Al-Mn-Fe, Al-Fe-Si and Al-Mn-Si-Fe compound phases and lower a solid solubility of Mn and Si in the matrix to rise the melting point of the matrix. An Fe content is 0.1-1.0%. When the Fe content is less than 0.1%, its effect is small. On the other hand, when it is more than 1.0%, its castability and rollability are lowered by creation of huge crystallized matters. The Fe content is preferably 0.1-0.3%.

### (Mn: 0.5-2.0%)

Mn forms an Al-Mn-Si intermetallic compound together with Si, and improves the strength by dispersion strengthening or by solute strengthening through solution in an aluminum parent phase. An Mn content is 0.5-2.0%. When its content is less than 0.5%, the effect is insufficient, and when it is more than 2.0%, a huge intermetallic compound is likely to be formed in casting, resulting in decreased plastic workability. The Mn content is preferably 0.8-1.8%. Additionally, in a case that the tube is manufactured by extrusion, when Mn is contained, Al-Mn-Fe, Al-Fe-Si and Al-Mn-Si-Fe compounds inhibit formation into a compact shape like a tube and remarkably lower extrudability, and thus it is preferable that Mn is not added in a case that the tube is manufactured by extrusion.

### (Cu: 0.1-1.0%)

Cu improves the strength by solute strengthening. In addition, Cu increases a potential at the core material and widens a potential difference with a brazing material to improve sacrificial anticorrosive effects between the core material and the brazing material. Furthermore, in the heat exchanger, Cu contained in the header pipe and the tube is diffused into the joint section in the course of braze heating to increase a potential at the joint section, thereby preferential corrosion is reduced by less-ennobling of the potential at the joint section, and thus Cu has an effect to improve the corrosion life of the whole heat exchanger. A Cu content is 0.1-1.0%. When its content is less than 0.1%, the effect is insufficient, and when it is more than 1.0%, an aluminum alloy is likely to crack in casting. The Cu content is preferably 0.1-0.6%.

### (Selective additive element)

The tube core material 2a used in the present invention may contain one or more selected from 0.1-1.0% of Mg, 0.05-0.3% of Ti, 0.05-0.3% of Zr, 0.05-0.3% of Cr, and 0.05-0.3% of V as selective additive elements.

Mg has an effect to improve the strength of the core material. An Mg content is preferably 0.1-1.0%. When the Mg content is less than 0.1%, its effect is small. On the other hand, when it is more than 1.0%, a potential at the core material becomes lower, a potential gradient with respect to the brazing material cannot be obtained, and the sacrificial anticorrosive effect of the brazing material is damaged, resulting in lowered corrosion resistance of the core material. The Mg content is preferably 0.1-0.5%.

Ti improves the strength by solute strengthening. A Ti content is preferably 0.05-0.3%. When its content is less than 0.05%, the effect may be insufficient, and when it is more than 0.3%, a huge intermetallic compound is likely to be formed, and the plastic workability may be lowered. The Ti content is more preferably 0.1-0.2%.

Zr improves the strength by solute strengthening, and acts on coarsening of the crystal grain after brazing by deposition of the Al-Zr intermetallic compounds. A Zr content is preferably 0.05-0.3%. When it is less than 0.05%, the effect may not be obtained. When it is more than 0.3%, a huge intermetallic compound is likely to be formed, and the plastic workability may be lowered. The Zr content is more preferably 0.1-0.2%.

Cr improves the strength by solute strengthening, and acts on coarsening of the crystal grain after brazing by deposition of the Al-Cr intermetallic compounds. A Cr content is preferably 0.05-0.3%. When it is less than 0.05%, the effect may not be obtained. When it is more than 0.3%, a huge intermetallic compound is likely to be formed, and the plastic workability may be lowered. The Cr content is more preferably 0.1-0.2%.

V improves the strength by solute strengthening, and also improves corrosion resistance. A V content is preferably 0.05-0.3%. When it is less than 0.05%, the effect may not be obtained. When it is more than 0.3%, a huge intermetallic compound is likely to be formed, and the plastic workability may be lowered. The Vr content is more preferably 0.1-0.2%.

### 6. Tube braze-functionalized sacrificial anode material 2b

For the tube braze-functionalized sacrificial anode material 2b with which the tube core material 2a is cladded, an aluminum alloy containing 2.5-15.0% of Si, 0.05-1.0% of Fe and 0.5-5.0% of Zn and comprising a remainder Al and unavoidable impurities is used.

In relation to a cladding ratio of the tube braze-functionalized sacrificial anode material 2b for cladding the tube core material 2a, a cladding ratio enough for obtaining sufficient sacrificial braze performance and anticorrosive effects is required. When the cladding ratio is too low, it is likely that joining property is lowered due to shortage of the brazing filler in brazing, and the sacrificial anticorrosive effect is reduced. When the cladding ratio is too high, the core material is likely to melt because the melted brazing filler is increased. Thus, the cladding ratios of the sacrificial anode material, the braze-functionalized sacrificial anode material and the brazing material are desirably 8-20%.

### (Si: 2.5-15.0%)

Addition of Si causes a liquid phase due to a decreased melting point of the sacrificial anode material, which allows brazing. An Si content is 2.5-15.0%. When it is less than 2.5%, the amount of the caused liquid phase is small, and thus outer brazing hardly functions. On the other hand, when it is more than 15.0%, the amount of the liquid phase caused in braze heating is excessively increased, and the sacrificial anode material part present as a remaining solid phase is decreased, resulting in decreased corrosion resistance. The Si content is preferably 4.0-12.0%.

### (Zn: 0.5-5.0%)

Zn can make a potential lower and form a potential difference with respect to the core material to improve the corrosion resistance by the sacrificial anode effect. Furthermore, in the heat exchanger, Zn contained in the header pipe and the tube is diffused into the joint section in the course of braze heating to make the potential lower at the joint section, and thereby an effect to reduce corrosion of the core materials of the header pipe and the tube is generated. The Zn content is 0.5-5.0%. When it is less than 0.5%, the effect to improve the corrosion resistance by the sacrificial anode effect is insufficient. On the other hand, it is more than 5.0%, the corrosion rate is increased, the sacrificial anode material disappears early, resulting in decreased corrosion resistance. Furthermore, the amount of Zn diffused on the joint section in braze heating is increased, and a potential at the joint section becomes remarkably lower so that preferential corrosion of the joint section is enhanced to cause corrosive leakage on the joint section. The Zn content is preferably 1.0-4.0%.

### (Fe: 0.05-1.0%)

Fe forms an Al-Fe-Mn-Si compound together with Si and Mn, and improves the strength by dispersion strengthening. An amount of the added Fe is 0.05-1.0%. When its content is less than 0.05%, a high-purity aluminum base metal must be used, resulting in high cost. On the other hand, it is more than 1.0%, a huge intermetallic compound is likely to be formed in casting, resulting in decreased plastic workability. Furthermore, for the braze-functionalized sacrificial material, when the Fe content is more than 1.0%, flowability of the brazing filler in brazing is lowered due to formation of an Al-Fe and Al-Fe-Si compounds, and braze performance is inhibited. The Fe content is preferably 0.05-0.5%.

### (Selective additive element)

The tube braze-functionalized sacrificial anode material 2b used for the present invention may contain one or more of 0.05-1.0% of Mn, 0.05-0.3% of Ti, 0.05-0.3% of Zr, 0.05-0.3% of Cr, 0.05-0.3% of V, 0.001-0.05% of Na and 0.001-0.05% of Sr as selective additive elements.

Since Mn improves strength and corrosion resistance, it is preferable that Mn is contained. An Mn content is preferably 0.05-1.0%. When it is more than 1.0%, a huge intermetallic compound is likely to be formed in casting, and thereby the plastic workability may be lowered. In addition, since Mn increases the potential at the sacrificial anode material, it inhibits the sacrificial anode effect, and thereby the corrosion resistance may be decreased. On the other hand, when its content is less than 0.05%, the effect may be insufficient. The Mn content is more preferably 0.1-0.5%.

Ti improves the corrosion resistance as well as the strength by solute strengthening. A Ti content is preferably 0.05-0.3%. When it is less than 0.05%, the effect may not be obtained. When it is more than 0.3%, the huge intermetallic compound is likely to be formed, and the plastic workability may be lowered. The Ti content is more preferably 0.1-0.2%.

Zr improves the strength by solute strengthening, and acts on coarsening of the crystal grain after brazing by deposition of the Al-Zr intermetallic compounds. A Zr content is preferably 0.05-0.3%. When it is less than 0.05%, the effect may not be obtained. When it is more than 0.3%, a huge intermetallic compound is likely to be formed, and the plastic workability may be lowered. The Zr content is more preferably 0.1-0.2%.

Cr improves the strength by solute strengthening, and acts on coarsening of the crystal grain after brazing by deposition of the Al-Cr intermetallic compounds. A Cr content is preferably 0.05-0.3%. When it is less than 0.05%, the effect may not be obtained. When it is more than 0.3%, a huge intermetallic compound is likely to be formed, and the plastic workability may be lowered. The Cr content is more preferably 0.1-0.2%.

V improves the strength by solute strengthening, and also improves corrosion resistance. A V content is preferably 0.05-0.3%. When it is less than 0.05%, the effect may not be obtained. When it is more than 0.3%, a huge intermetallic compound is likely to be formed, and the plastic workability may be lowered. The V content is more preferably 0.1-0.2%.

Na and Sr are added to the skin material of the Al-Si brazing filler, thereby the size of the Si particles in the Al-Si brazing material is finely and uniformly dispersed to control development of coarse Si particles, and thus a local melting and erosion on the joint section with the core material of the Al-Si brazing material and the fin are suppressed. When contents of Na and Sr are less than 0.001%, the effect cannot be sufficiently obtained. On the other hand, when it is more than 0.05%, oxidation of the brazing filler progresses in braze heating, resulting in lowered braze flowability and braze performance. Consequently, the contents of Na and Sr are preferably 0.001-0.05%, more preferably 0.005-0.015%.

In addition, the tube cladding material is made as a rolled sheet and formed into a tubular shape by bending work or the like, and can be used depending on uses of the heat exchanger.

### 7. Zn thermal spraying on surface of the tube 2

Zn can be attached to the outer surface of the aluminum alloy tube 2 used for the present invention. Methods of attaching Zn include Zn thermal spraying, Zn application, plating and the like. In Zn thermal spraying, the Zn thermally-sprayed layer becomes a Zn-diffused layer by brazing. The Zn-diffused layer protects the Al alloy from corrosion by the sacrificial anticorrosive effect, because a pitting potential at the layer is lower than that of an Al alloy area where Zn is not diffused, allowing a durability life of the Al alloy to be improved. When an amount of the thermally sprayed Zn is less than 3g/m², the sacrificial anticorrosive effect is not sufficiently expressed, and when it is more than 15 g/m², a corrosion rate is increased, corrosion progresses to the core material 2 of the tube 2 early, and thus the corrosion life of the tube 2 is decreased. Consequently, the amount of the thermally sprayed Zn is desirably 3-15 g/m².

The tube 2 to which Zn was thermally sprayed is made into a tubular shape by extrusion, and an extrusion tube is used depending on uses of the bent heat exchanger.

### 8. Potentials at the heat exchanger

Next, potentials at the aluminum alloy heat exchanger 1 according to the present invention will be explained.

In the header pipe 4 and the tube 2, a potential gradient between them is generated by diffusing Zn or the like contained in the skin material on the core material side in the course of braze heating. Also after the skin material disappeared by the sacrificial anticorrosive effect, an element with a lower potential like Zn diffused into the core material generates the potential gradient on the core material, the surface of the core material with a lower potential has the sacrificial anticorrosive effect, and corrosion in a depth direction is reduced to improve corrosion-resistance life. At this time, if a potential gradient between each middle of the overall thicknesses of the surfaces of the header pipe 4 and the tube 2 is small, the core material with a small potential gradient attains to corrosive leakage early after the skin material having the sacrificial anticorrosive effect disappears due to corrosion, resulting in shortened corrosion life of the heat exchanger 1. Hence, a potential gradient is required between the middle of the overall thicknesses of the surfaces of the header pipe 4 and that of the tube 2. Furthermore, in a depth of one quarter of the overall thickness between the middles, any potential constitutions of the heat exchanger defined in the present invention can improve the corrosion-resistance life by action of the sacrificial anticorrosive effect on the core material even after disappearance of the skin material.

The cladding ratio in the present invention is 8-20%, the potential at a position in a depth of one quarter of the overall thickness means a potential at a position where corrosion due to sacrificial anticorrosive effect reaches the core material.

As shown in Fig. 2, in the present embodiment, characteristically a potential V0 at the joint section 5 between the header pipe 4 and the tube 2 is lower by 30 mV or less than a potential V1 at the surface of the header pipe 4 and a potential V2 at the surface of the tube 2, and the potential V0 at the joint section 5 is lower by 30-100 mV than a potential V3 at a position α in a depth of one quarter of the overall thickness from the surface of the header pipe 4 and a potential V4 at a position β in a depth of one quarter of the overall thickness from the surface of the tube 2.

When a foreign matter with a different potential is attached under a corrosive environment, corrosion progresses preferentially from an area with a lower potential. Using this phenomenon, the surface layer of the cladding material is cladded with a different metal with a lower potential as a skin material, and this skin material is preferentially corroded to delay corrosion toward the core material and improve the corrosion life. This is called a sacrificial anticorrosive effect.

In the aluminum alloy heat exchanger 1, the components such as tube 2, fin 3 and header pipe 4 are individually joined by braze heating at about 600°C in a usual method. The joint section 5 is filled with an Al-Si alloy brazing filler melted by braze heating, and each component in the heat exchanger is joined by solidification of the Al-Si alloy brazing filler. In relation to the corrosion resistance, coolant water or a refrigerant flows in the tube 2 and he header pipe 4, corrosive leakage results in loss of functions as the heat exchanger, and thus the tube 2 and the header pipe 4 are often used by application of a Zn powder with a lower potential and cladding of a skin material (a sacrificial anode material or a braze-functionalized sacrificial anode material) having the sacrificial anticorrosive effect. However, Zn contained in the sacrificial anode material and the braze-functionalized sacrificial anode material is diffused into the joint section 5 between the tube 2 and the header pipe 4 in the course of braze heating, thereby the potential at the joint section is lower than those of the surface of the tube 2 and the surface of the header pipe 4, preferential corrosion of the joint section 5 is caused, and thus corrosive leakage may occur from the joint section 5.

In the present invention, besides Zn with a lower potential, an element with a higher potential like Cu is diffused in the course of braze heating, and thereby less-ennobling of the potential at the joint section 5 is reduced. At this time, if a potential V0 at the joint section 5 between the header pipe 4 and the tube 2 is lower by 30 mV or less than a potential V1 at the surface of the header pipe 4 and a potential V2 at the surface of the tube 2, preferential corrosion of the joint section 5 can be reduced to improve the corrosion life of the whole heat exchanger. At this time, when the potential difference is lower by more than 30 mV, the preferential corrosion of the joint section 5 progresses, the sacrificial anticorrosive effects of the tube 2 and the header pipe 4 insufficiently act, resulting in early corrosive leakage from the joint section 5. In addition, when the potential V0 at the joint section 5 is higher than the potential V1 at the surface of the header pipe 4 and the potential V2 at the surface of the tube 2, the sacrificial anticorrosion of the surfaces of the header pipe 4 and the tube 2 is activated, and thus preferential corrosion of the joint section 5 cannot be caused.

In addition, the sacrificial anode material, the braze-functionalized sacrificial anode material and Zn contained in the Zn thermal spraying material are diffused in a thickness direction of the core material in the course of braze heating, and a concentration gradient and a potential gradient of Zn are formed from the surface in its thickness direction. Using this, the sacrificial anticorrosive effect is activated from the core material containing diffused Zn in the vicinity of the interface between the skin material and the core material even after the skin material disappears due to sacrificial corrosion. By this action, the corrosion life of the joint section 5 is improved, and the increased potential difference between the header pipe 4/tube 2 and the joint section 5 reduces the preferential corrosion of the joint section 5 to improve the corrosion-resistance life of the whole heat exchanger. As the surfaces of the header 4 and the tube 2 disappears in the depth direction due to corrosion, the potential becomes higher, but at this time, if the potential difference between the header pipe 4/tube 2 and the joint section 5 is great, early corrosive leakage of the joint section 5, or early corrosive leakage of the header pipe 4 and the tube 2 occurs. At this time, as for the position α in a depth of one quarter of the overall thickness from the surface of the header pipe 4 and the position β in a depth of one quarter of the overall thickness from the surface of the tube 2, if the potential V0 at the joint section 5 is lower by 30-100 mV than the potential V3 at the position α and the potential V4 at the position β, the early corrosion leakage due to preferential corrosion of the joint section 5 or the header pipe 4 and the tube 2 can be suppressed.

When the potential V0 at the joint section 5 is lower by less than 30 mV than the potential V3 and the potential V4, the sacrificial anticorrosive effect of the core material with diffused Zn in the vicinity of the interface between the skin material and the core material of the header pipe 4 and the tube 2 does not act, resulting in early corrosion leakage of the header 4 and the tube 2. In addition, when the potential V0 at the joint section 5 is lower by more than100 mV, preferential corrosion of the joint section 5 occurs, resulting in early corrosion leakage.

As described above, the potential V0 at the joint section 5 between the header pipe 4 and the tube 2 is lower by 30 mV or less than the potential V1 at the surface of the header pipe 4 and the potential V2 at the surface of the tube 2, and the potential V0 at the joint section 5 is lower by 30-100 mV than the potential V3 at the position α in a depth of one quarter of the overall thickness from the surface of the header pipe 4 and the potential V4 at the position β in a depth of one quarter of the overall thickness from the surface of the tube 2.

### 9. Manufacturing method

### 9-1. Manufacturing method of header pipe 4

The header pipe 4 of the aluminum alloy cladding material used for the aluminum alloy heat exchanger 1 according to an embodiment of the present invention can be manufactured using a method for electric resistance welding of the cladded rolled sheet material or a method for extrusion. In the method for electric resistance welding of the cladding material, for example, after slab is made by casting, this slab is homogenized, subsequently chamfered, then the header pipe core material 4a is cladded with the skin material (header pipe sacrificial anode material 4b or header pipe braze-functionalized sacrificial anode material 4b'), followed by hot rolling and cold rolling, to manufacture a rolled sheet. At this time, it is preferable that the above-described homogenization is conducted at 520°C. The homogenization at 520°C or higher allows second solid solution of the intermetallic compound in the core material, and it can be finely re-deposited in the subsequent step. In addition, the homogenization of the core material may be unnecessary depending on its uses. In this case, the subsequent step can be started while the intermetallic compound obtained in casting maintains the fine state.

Subsequently, the core material and the skin material are preferably preserved at 400-550°C for 1-10 hours before conducting cladding and hot rolling. When the temperature is below 400°C, a crack may be caused in rolling because the temperature of the material in rolling is too low, and when the temperature is over 550°C, the braze-functionalized sacrificial material 4b' may be melted. When the duration is shorter than 1 hour, the temperature of the material is uneven, and when the duration is 10 hours or longer, the productivity is remarkably diminished. Subsequently, the rolled sheet is bent into a follow pipe shape by cold rolling, and the junction is joined by arc welding through electric resistance welding to make an electric resistance welded tube in a shape of the header pipe 4.

Alternatively, the methods for extrusion include e.g. a method in which a billet is manufactured by casting, then the billet is homogenized, the center of the core material billet is punched, the outside of the core material and the inside punched according to its use are cladded with the skin material, followed by hot extrusion by a mandrel method and drawing such as bull block, to manufacture an extrusion pipe formed in a shape of the header pipe 4. At this time, it is preferable that the above-described homogenization is conducted at 520°C or higher. The homogenization at 520°C or higher allows second solid solution of the intermetallic compound in the core material, and it can be finely re-deposited in the subsequent step. In addition, the homogenization of the core material may be unnecessary depending on its uses. In this case, the subsequent step can be started while the intermetallic compound obtained in casting maintains the fine state.

Subsequently, the billet core material and the skin material are preferably hot-extruded while being heated at 400-550°C before cladding and hot extrusion. When the temperature is below 400°C, a metal clogging may be caused in a dies during extrusion because the temperature of the material in extrusion is too low, and when the temperature is over 550°C, the header pipe braze-functionalized sacrificial anode material 4b' may be melted.

Either the electric resistance welded tube or the extrusion pipe may be used in the present invention.

### 9-2. Manufacturing method of tube 2 (rolled sheet)

The tube 2 of the aluminum alloy cladding material used for the aluminum alloy heat exchanger 1 according to an embodiment of the present invention can be manufactured by a process that after a slab is made by casting, this slab is homogenized, subsequently chamfered, then the tube core material 2a is cladded with the skin material (sacrificial anode material or tube braze-functionalized sacrificial anode material 2b), followed by hot rolling and cold rolling to make a rolled sheet, and it is formed in a tubular shape by bending or the like. At this time, it is preferable that the above-described homogenization is conducted at 520°C. The homogenization at 520°C allows second solid solution of the intermetallic compound in the tube core material 2a, and it can be finely re-deposited in the subsequent step. In addition, the homogenization of the tube core material 2a may be unnecessary depending on its uses. In this case, the subsequent step can be started while the intermetallic compound obtained in casting maintains the fine state.

Subsequently, the tube core material 2a is cladded with the skin material and is preferably preserved at 400-550°C for 1-10 hours before hot rolling. When the preserving temperature is below 400°C, a crack may be caused in rolling because the temperature of the material in rolling is too low, and when the temperature is over 550°C, the tube braze-functionalized sacrificial anode material 2b may be melted. When the preserving duration is shorter than 1 hour, the temperature of the material is uneven, and when the duration is longer than 10 hours, the productivity may be remarkably diminished.

In addition, an inner fin is installed in the tube 2 depending on uses of the heat exchanger.

### 9-3. Manufacturing method of tube 2 (Zn thermal spraying into extruded material)

The tube 2 (Zn thermal spraying into an extrusion material) used for the aluminum alloy heat exchanger 1 according to an embodiment of the present invention can be manufactured by a process that after a billet is made by casting, the billet is homogenized, subsequently formed in a tubular shape through hot extrusion, and Zn is applied on the surface of the tube by Zn thermal spraying to make an extruded tube. At this time, it is preferable that the above-described homogenization is conducted at 520°C or higher. The homogenization at 520°C allows second solid solution of the intermetallic compound in the billet core material, and it can be finely re-deposited in the subsequent step. In addition, the homogenization of the billet core material may be unnecessary depending on its uses. In this case, the subsequent step can be started while the intermetallic compound obtained in casting maintains the fine state.

Subsequently, the hot extrusion is preferably conducted while being heated at 400-550°C before the hot extrusion. When the temperature is below 400°C, a metal clogging may be caused in a dies during extrusion because the temperature of the material in extrusion is too low, and when the temperature is over 550°C, the extruded tube may soften and deform.

### 9-4. Manufacturing method of fin 3

Although the manufacturing method of fin 3 used for an aluminum alloy heat exchanger 1 according to an embodiment of the present invention is not particularly limited, a method in which a brazing sheet prepared by using a 3000-series alloy bare material or a 3000-series alloy as a core material and cladding both sides of the core material with an Al-Si alloy as a brazing material is corrugated in a fin shape, is used.

### 9-5. Manufacturing method of heat exchanger

The aluminum alloy heat exchanger 1 according to an embodiment of the present invention can be manufactured by e.g. a process that the fin 3 material is placed on the outer face of the tube 2 of which the both ends are attached to the header pipe 4, and they are assembled and simultaneously joined by one braze heating.

As the brazing method used in the present invention, preferably an NB method using a fluoride-based flux under a nitrogen atmosphere (Nocolok brazing method, etc.) and a method in which an oxidized film on a surface of an aluminum material is reduced and destroyed by Mg contained in the material under vacuum or under a nitrogen atmosphere (vacuum brazing, fluxless brazing) are used. In addition, brazing is usually conducted by heating at 590-610°C for 2-10 minutes, preferably at 590-610°C for 2-6 minutes. When the heating temperature is below 590°C or the heating time is shorter than 2 minutes, insufficient brazing may be caused. On the other hand, when the heating temperature is over 610°C or the heating time is longer than 10 minutes, components may be melted.

Since the aluminum alloy heat exchanger 1 obtained in such a way has a preferable corrosion resistance, local preferential corrosion can be suppressed under a stringent corrosive environment, resulting in an improved corrosion life of the heat exchanger.

### EXAMPLES

Hereinafter, examples of the present invention will be described together with comparative examples. It should be noted that the following examples are intended to explain the effects of the present invention, and processes, conditions and performance values described in the examples do not limit the technical scope of the present invention.

Header pipe core material alloys having alloy compositions shown in Table 1, header pipe sacrificial anode material alloys having alloy compositions shown in Table 2, header pipe braze-functionalized sacrificial anode material alloys having alloy compositions shown in Table 3, header pipe brazing material alloys having alloy compositions shown in Table 4, tube core material alloys having alloy compositions shown in Table 5, and tube braze-functionalized sacrificial anode material alloys having alloy compositions shown in Table 6 were individually casted by DC casting. A billet with a size of φ145 mm × 250 mm length was made for the header pipe core material alloy, a slab with a size of 258 mm × 790 mm × 1600 mm was made as a core material for the tube core material alloy cladding material, a billet with a size of φ145 mm × 250 mm length was made for the tube core material alloy extruded material, respective core material alloys were subjected to homogenization of 600°C x 3h, and both sides of respective materials were chamfered for finishing. It should be noted that "-" in Tables 1-6 means non-addition.
**Table 1 Alloy components for the header pipe core material**

**Table 1**

| **Symbol of alloy** | **Composition of the header pipe core material alloy components (unit: mass%)** | | | | | | | | | |
|---|---|---|---|---|---|---|---|---|---|---|
| | Si | Fe | Mn | Cu | Mg | Ti | Zr | Cr | V | **Remainder** |
| A1 | 0.50 | 0.25 | 1.20 | 0.45 | - | - | - | - | - | Al |
| A2 | 0.20 | 0.25 | 1.00 | 0.08 | - | - | - | - | - | Al |
| A3 | 0.05 | 0.25 | 1.30 | 0.50 | - | - | - | - | - | Al |
| A4 | 0.20 | 0.11 | 0.35 | 0.05 | - | - | - | - | - | Al |
| A5 | 1.40 | 0.90 | 1.90 | 0.80 | - | - | - | - | - | Al |
| A6 | 0.40 | 0.30 | 1.20 | 0.50 | 0.3 | - | - | - | - | Al |
| A7 | 0.40 | 0.30 | 1.30 | 0.40 | - | 0.14 | - | - | - | Al |
| A8 | 0.45 | 0.35 | 1.20 | 0.45 | - | - | 0.15 | 0.15 | - | Al |
| A9 | 0.40 | 0.25 | 1.15 | 0.40 | - | - | - | 0.15 | 0.15 | Al |
| A10 | 0.50 | 0.30 | 1.30 | 0.40 | - | - | 0.15 | - | 0.15 | Al |
| A11 | 0.40 | 0.40 | 1.25 | 0.45 | 0.2 | 0.13 | 0.18 | 0.15 | 0.15 | Al |
| A12 | 2.00 | 0.30 | 1.10 | 0.50 | - | - | - | - | - | Al |
| A13 | 0.40 | 1.50 | 1.20 | 0.45 | - | - | - | - | - | Al |
| A14 | 0.40 | 0.20 | 2.50 | 0.40 | - | - | - | - | - | Al |
| A15 | 0.45 | 0.25 | 1.30 | 0.00 | - | - | - | - | - | Al |
| A16 | 0.40 | 0.25 | 1.20 | 1.60 | - | - | - | - | - | Al |

**Table 2 Header pipe sacrificial anode material**

**Table 2**

| **Symbol of alloy** | **Composition of the header pipe sacrificial anode material alloy components (unit: mass%)** | | | | | | | | |
|---|---|---|---|---|---|---|---|---|---|
| | Zn | Si | Fe | Mn | Ti | Zr | Cr | V | Al |
| B1 | 1.20 | 0.15 | 0.10 | - | - | - | - | - | **Remainder** |
| B2 | 0.60 | 0.20 | 0.10 | 0.05 | - | - | - | - | **Remain- der** |
| B3 | 3.50 | 0.15 | 0.50 | 0.90 | - | - | - | - | **Remainder** |
| B4 | 1.50 | 0.15 | 0.10 | - | 0.05 | 0.05 | 0.05 | 0.05 | **Remainder** |
| B5 | 1.50 | 0.15 | 0.10 | - | 0.20 | 0.20 | 0.20 | 0.20 | **Remainder** |
| B6 | 5.50 | 0.15 | 0.10 | - | - | - | - | - | **Remainder** |
| B7 | 2.00 | 0.20 | 2.20 | - | - | - | - | - | **Remainder** |

**Table 3 Header pipe braze-functionalized sacrificial material**

**Table 3**

| **Symbol of alloy** | **Composition of the header pipe braze-functionalized sacrificial anode material alloy (mass%)** | | | | | | | | | | |
|---|---|---|---|---|---|---|---|---|---|---|---|
| | Si | Zn | Fe | Mn | Ti | Zr | Cr | V | Sr | Na | Al |
| C1 | 7.50 | 1.50 | 0.15 | - | - | - | - | - | - | - | Remainder |
| C2 | 3.00 | 0.70 | 0.15 | - | - | - | - | - | - | - | **Remainder** |
| C3 | 14.00 | 4.50 | 0.50 | - | - | - | - | - | - | - | **Remainder** |
| C4 | 7.50 | 2.00 | 0.15 | 0.05 | 0.05 | 0.05 | 0.05 | 0.05 | 0.001 | 0.001 | **Remainder** |
| C5 | 7.50 | 2.00 | 0.15 | 0.90 | 0.20 | 0.20 | 0.20 | 0.20 | 0.05 | 0.05 | **Remainder** |
| C6 | 2.00 | 2.00 | 0.15 | - | - | - | - | - | - | - | **Remainder** |
| C7 | 20.00 | 2.00 | 0.15 | - | - | - | - | - | - | - | **Remainder** |
| C8 | 7.50 | 0.30 | 0.15 | - | - | - | - | - | - | - | **Remainder** |
| C9 | 7.50 | 6.00 | 0.15 | - | - | - | - | - | - | - | **Remainder** |
| C10 | 7.50 | 2.00 | 1.20 | - | - | - | - | - | - | - | **Remainder** |

**Table 4 Header pipe brazing material**

**Table 4**

| **Symbol of alloy** | **Composition of the header pipe brazing material alloy (mass%)** | | | | | | | | | |
|---|---|---|---|---|---|---|---|---|---|---|
| | Si | Fe | Mn | Ti | Zr | Cr | V | Sr | Na | Al |
| D1 | 10.00 | 0.15 | - | - | - | - | - | - | - | **Remainder** |
| D2 | 3.00 | 0.15 | - | - | - | - | - | - | - | **Remainder** |
| D3 | 13.00 | 0.50 | - | - | - | - | - | - | - | **Remainder** |
| D4 | 10.00 | 0.15 | 0.05 | 0.05 | 0.05 | 0.05 | 0.05 | 0.001 | 0.001 | **Remainder** |
| D5 | 10.00 | 0.15 | 0.90 | 0.20 | 0.20 | 0.20 | 0.20 | 0.05 | 0.05 | |
| D6 | 10.00 | 1.40 | - | - | - | - | - | - | - | **Remainder** |

**Table 5 Alloy components for the tube core material**

**Table 5**

| **Symbol of alloy** | **Composition of the tube core material alloy components (unit: mass%)** | | | | | | | | | |
|---|---|---|---|---|---|---|---|---|---|---|
| | Si | Fe | Mn | Cu | Mg | Ti | Zr | Cr | V | **Remainder** |
| E1 | 0.50 | 0.25 | 1.20 | 0.45 | - | - | - | - | - | Al |
| E2 | 0.05 | 0.11 | 0.55 | 0.08 | - | - | - | - | - | Al |
| E3 | 1.40 | 0.90 | 1.80 | 0.80 | - | - | - | - | - | Al |
| E4 | 0.40 | 0.30 | 1.20 | 0.50 | 0.3 | 0.13 | 0.18 | 0.15 | 0.15 | Al |
| E5 | 0.50 | 0.25 | - | 0.45 | - | - | - | - | - | Al |
| E6 | 1.40 | 0.90 | - | 0.80 | - | - | - | - | - | Al |
| E7 | 0.40 | 0.30 | - | 0.50 | 0.3 | 0.13 | 0.18 | 0.15 | 0.15 | Al |
| E8 | 2.00 | 0.30 | 1.10 | 0.50 | - | - | - | - | - | Al |
| E9 | 0.40 | 1.50 | 1.20 | 0.45 | - | - | - | - | - | Al |
| E10 | 0.40 | 0.20 | 2.50 | 0.40 | - | - | - | - | - | Al |
| E11 | 0.45 | 0.25 | 1.30 | 0.50 | - | - | - | - | - | Al |
| E12 | 0.40 | 0.25 | 1.20 | 1.60 | - | - | - | - | - | Al |
| E13 | 2.00 | 0.30 | - | 0.50 | - | - | - | - | - | Al |
| E14 | 0.40 | 1.50 | - | 0.45 | - | - | - | - | - | Al |
| E15 | 0.45 | 0.25 | - | 0.00 | - | - | - | - | - | Al |
| E16 | 0.40 | 0.25 | - | 1.60 | - | - | - | - | - | Al |

**Table 6 Tube braze-functionalized sacrificial anode material**

**Table 6**

| **Symbol of alloy** | **Composition of the tube braze-functionalized sacrificial material alloy (mass%)** | | | | | | | | | | |
|---|---|---|---|---|---|---|---|---|---|---|---|
| | Si | Zn | Fe | Mn | Ti | Zr | Cr | V | Sr | Na | Al |
| F1 | 5.00 | 1.50 | 0.15 | - | - | - | - | - | - | - | **Remainder** |
| F2 | 3.00 | 0.70 | 0.15 | 0.05 | 0.05 | 0.05 | 0.05 | 0.05 | 0.001 | 0.001 | **Remainder** |
| F3 | 14.00 | 4.50 | 0.50 | 0.90 | 0.20 | 0.20 | 0.20 | 0.20 | 0.05 | 0.05 | **Remainder** |
| F4 | 2.00 | 2.00 | 0.15 | - | - | - | - | - | - | - | **Remainder** |
| F5 | 20.00 | 1.50 | 0.15 | - | - | - | - | - | - | - | **Remainder** |
| F6 | 7.50 | 0.30 | 0.15 | - | - | - | - | - | - | - | **Remainder** |
| F7 | 7.50 | 6.00 | 0.15 | - | - | - | - | - | - | - | **Remainder** |
| F8 | 7.50 | 2.00 | 1.40 | - | - | - | - | - | - | - | **Remainder** |

Using these alloys, one side or both sides of the header pipe core material alloy and the tube core material alloy were cladded with any of the braze-functionalized sacrificial anode material, the brazing material and the sacrificial anode material so that cladding ratios in the header pipe and the tube material are 15% respectively. Combinations of the cladding materials for the header pipe are shown in Tables 7-1 and 7-2, and combinations of the cladding materials for the tube are shown in Table 8. These cladding materials were heated at 480°C for 3 hours, then the header pipes were hot-extruded by mandrel extrusion and the tube materials were hot-rolled. Furthermore, the header pipes after hot extrusion were subjected to drawing and annealing to make a pipe of φ20 mm outer diameter × 1.0 mm thickness, and the tube cladding materials after hot rolling were subjected to cold rolling and annealing to make a brazing sheet with thickness of 0.3 mm. The tube extruded materials were heated at 480°C for 3 hours, then subjected to hot extrusion to make an extruded tube of 20 mm width × 3 mm height and 0.3 mm thickness, and a Zn powder was thermally sprayed on the tube surface at 3 g/m².

No problem was caused in the above-mentioned process. As for cases that the pipe could be drawn to a size of φ20 mm outer diameter × 1.0 mm thickness and the brazing sheet could be rolled to a thickness of 0.3 mm, the manufacturability are represented by circle, and as for cases that a final product could not normally manufactured due to cracks in casting and cracks in extrusion, drawing and rolling, the manufacturability is represented by cross, and they are shown together in Tables 7-1, 7-2 and 8. **Table 7-1 Combinations for the header pipes**

**Table 7-1**

| | No. | **Core material** | **Outer skin material** | | **Inner skin material** | **Manufactur -ability** |
|---|---|---|---|---|---|---|
| | | | **Alloy** | **Cladding ratio** | | |
| | 1 | A1 | B1 | 0.15 | D1 | ○ |
| | 2 | A1 | B1 | 0.15 | None | ○ |
| | 3 | A2 | B1 | 0.15 | D1 | ○ |
| | 4 | A2 | B1 | 0.15 | None | ○ |
| | 5 | A3 | B1 | 0.15 | D1 | ○ |
| | 6 | A4 | B1 | 0.15 | D1 | ○ |
| | 7 | A5 | B1 | 0.15 | D1 | ○ |
| | 8 | A6 | B1 | 0.15 | D1 | ○ |
| | 9 | A7 | B1 | 0.15 | D1 | ○ |
| | 10 | A8 | B1 | 0.15 | D1 | ○ |
| | 11 | A9 | B1 | 0.15 | D1 | ○ |
| | 12 | A10 | B1 | 0.15 | D1 | ○ |
| | 13 | A11 | B1 | 0.15 | D1 | ○ |
| | 14 | A1 | C1 | 0.15 | D1 | ○ |
| | 15 | A1 | C1 | 0.15 | None | ○ |
| | 16 | A2 | C1 | 0.15 | D1 | ○ |
| | 17 | A2 | C1 | 0.15 | None | ○ |
| Examples of the inventions | 18 | A3 | C1 | 0.15 | D1 | ○ |
| | 19 | A4 | C1 | 0.15 | D1 | ○ |
| | 20 | A5 | C1 | 0.15 | D1 | ○ |
| | 21 | A6 | C1 | 0.15 | D1 | ○ |
| | 22 | A7 | C1 | 0.15 | D1 | ○ |
| | 23 | A8 | C1 | 0.15 | D1 | ○ |
| | 24 | A9 | C1 | 0.15 | D1 | ○ |
| | 25 | A10 | C1 | 0.15 | D1 | ○ |
| | 26 | A11 | C1 | 0.15 | D1 | ○ |
| | 27 | A1 | B2 | 0.15 | D1 | ○ |
| | 28 | A1 | B3 | 0.15 | D1 | ○ |
| | 29 | A1 | B4 | 0.15 | D1 | ○ |
| | 30 | A1 | B5 | 0.15 | D1 | ○ |
| | 31 | A1 | C2 | 0.15 | D1 | ○ |
| | 32 | A1 | C3 | 0.15 | D1 | ○ |
| | 33 | A1 | C4 | 0.15 | D1 | ○ |
| | 34 | A1 | C5 | 0.15 | D1 | ○ |
| | 35 | A1 | C1 | 0.15 | D2 | ○ |
| | 36 | A1 | C1 | 0.15 | D3 | ○ |
| | 37 | A1 | C1 | 0.15 | D4 | ○ |
| | 38 | A1 | C1 | 0.15 | D5 | ○ |

Table 7-2 Combinations for the header pipes

**Table 7-2**

| | No. | **Core material** | **Outer skin material** | | **Inner skin material** | **Manufactur -ability** |
|---|---|---|---|---|---|---|
| | | | **Alloy** | **Cladding ratio** | | |
| | 39 | A12 | C1 | 0.15 | D1 | ○ |
| | 40 | A13 | C1 | 0.15 | D1 | × |
| | 41 | A14 | C1 | 0.15 | D1 | × |
| | 42 | A15 | C1 | 0.15 | D1 | ○ |
| | 43 | A16 | C1 | 0.15 | D1 | × |
| **Comparative examples** | 44 | A1 | B6 | 0.15 | D1 | ○ |
| | 45 | A1 | B7 | 0.15 | D1 | × |
| | 46 | A1 | C6 | 0.15 | D1 | ○ |
| | 47 | A1 | C7 | 0.15 | D1 | ○ |
| | 48 | A1 | C8 | 0.15 | D1 | ○ |
| | 49 | A1 | C9 | 0.15 | D1 | ○ |
| | 50 | A1 | C10 | 0.15 | D1 | ○ |
| | 51 | A1 | C1 | 0.15 | D6 | × |

**Table 8 Combinations for the tubes**

**Table 8**

| | **No.** | **Core material** | **Outer skin material** | | **Amount of thermally sprayed Zn (g/m2)** | **Manufactur -ability** |
|---|---|---|---|---|---|---|
| | | | **Alloy** | **Cladding ratio** | | |
| | 1 | E1 | F1 | 0.15 | - | ○ |
| | 2 | E2 | F1 | 0.15 | - | ○ |
| | 3 | E3 | F1 | 0.15 | - | ○ |
| **Examples** of the **inventions** | 4 | E4 | F1 | 0.15 | - | ○ |
| | 5 | E1 | F2 | 0.15 | - | ○ |
| | 6 | E1 | F3 | 0.15 | - | ○ |
| | 7 | E5 | - | - | 3 | ○ |
| | 8 | E6 | - | - | 3 | ○ |
| | 9 | E7 | - | - | 3 | ○ |
| | 10 | E8 | F1 | 0.15 | - | ○ |
| | 11 | E9 | F1 | 0.15 | - | × |
| | 12 | E10 | F1 | 0.15 | - | × |
| | 13 | E11 | F1 | 0.15 | - | ○ |
| **Comparative examples** | 14 | E12 | F1 | 0.15 | - | × |
| | 15 | E1 | F4 | 0.15 | - | ○ |
| | 16 | E1 | F5 | 0.15 | - | ○ |
| | 17 | E1 | F6 | 0.15 | - | ○ |
| | 18 | E1 | F7 | 0.15 | - | ○ |
| | 19 | E1 | F8 | 0.15 | - | ○ |
| | 20 | E13 | - | - | 3 | ○ |
| | 21 | E14 | - | - | 3 | × |
| | 22 | E15 | - | - | 3 | ○ |
| | 23 | E16 | - | - | 3 | × |

Subsequently, the pipe was punched in imitation of the header pipe, and the cladding material was bent in imitation of the tube to make a hollow tube of 20 mm width × 200 mm length. The tube 2 was inserted into the punched portion of the header pipe 4 so that it was arranged in the shape of the heat exchanger 1 shown in Fig. 1, furthermore the fin 3 made by corrugating a 3003-series alloy was sandwiched between the tubes 2, the heat exchanger 1 was soaked in an aqueous solution of 5% fluoride-based flux, and subjected to braze heating at 600°C for 3 minutes in a heating furnace by an NB method.

Combinations of the header pipes described in Tables 7-1 and 7-2 and the tubes described in Table 8 were shown in Tables 9-1 and 9-2, and the following evaluation results were summarized. Herein, in relation to "braze performance", preferable joining states that each component was not melted in the braze heating, the joint sections of the header pipe, the tube and the fin were not removed were represented by circle, and states that each component was melted the joint sections of the header pipe, the tube and the fin were removed were represented by cross. It should be noted that the following evaluation could not conducted for the combinations of the manufacturability indicated by cross in Tables 7-1, 7-2 and 8, because their samples could not be prepared.

### (1) Measurement of potential

In relation to of measurement of potentials at the header pipe surface, the tube surface, the joint section between the header pipe and the tube, and the position in a depth of one quarter of the overall thickness from the header pipe surface or the tube surface in the braze-heated heat exchanger, potentials were measured by a potential measuring apparatus in such a way that the areas other than the surface to be evaluated were masked and the heat exchanger was soaked in a 5% NaCl-15 ml/CH₃COOH solution at 25°C. Herein, potentials at each position in a depth of one quarter of the overall thickness respectively from the header pipe surface and tube surface were measured in such a way that the surface was exposed by etching with a 5% NaOH aqueous solution and washing with a 30% HNO₃ aqueous solution at a normal temperature. In addition, in Tables 9-1 and 9-2, the potential difference between the joint section and the header pipe surface was designated as potential A, the potential difference between the the joint section and the tube surface was designated as potential B, the potential difference between the the joint section and the position in a depth of one quarter of the overall thickness from the header pipe surface was designated as potential C, and he potential difference between the the joint section and the position in a depth of one quarter of the overall thickness from the tube surface was designated as potential D.

### (2) Corrosion resistance test of the heat exchanger

The braze-heated heat exchanger was used, and subjected to SWAAT test based on ASTM-G85, a state showing no perforation corrosion within 1000 hours was represented by "preferable corrosion resistance (indicated by circle)", and a state showing perforation corrosion on any of the header pipe, the tube and the joint section between the header pipe and the tube was represented by "failing grade (indicated by cross)". **Table 9-1 Evaluation results of Examples**

**Table 9-1**

| | **Miniature core No.** | **Header pipe No.** | **Tube No.** | **Braze Performance** | **Potential measurement (mV)** | | | | **Corrosion resistance** |
|---|---|---|---|---|---|---|---|---|---|
| | | | | | **Potential A** | **Potential B** | **Potential C** | **Potential D** | |
| | 1 | 1 | 1 | ○ | 5 | 10 | 90 | 80 | ○ |
| | 2 | 2 | 1 | ○ | 5 | 10 | 90 | 80 | ○ |
| | 3 | 3 | 1 | ○ | 5 | 20 | 45 | 90 | ○ |
| | 4 | 4 | 1 | ○ | 5 | 20 | 45 | 90 | ○ |
| | 5 | 5 | 1 | ○ | 5 | 8 | 90 | 78 | ○ |
| | 6 | 6 | 1 | ○ | 24 | 29 | 59 | 99 | ○ |
| | 7 | 7 | 1 | ○ | -5 | -30 | 87 | 40 | ○ |
| | 8 | 8 | 1 | ○ | 10 | 15 | 70 | 85 | ○ |
| | 9 | 9 | 1 | ○ | 15 | 20 | 90 | 90 | ○ |
| | 10 | 10 | 1 | ○ | 10 | 15 | 94 | 85 | ○ |
| | 11 | 11 | 1 | ○ | 8 | 12 | 92 | 82 | ○ |
| | 12 | 12 | 1 | ○ | 7 | 13 | 92 | 83 | ○ |
| | 13 | 13 | 1 | ○ | 15 | 20 | 80 | 90 | ○ |
| | 14 | 14 | 1 | ○ | 10 | 3 | 86 | 73 | ○ |
| | 15 | 15 | 1 | ○ | 10 | 3 | 86 | 73 | ○ |
| | 16 | 16 | 1 | ○ | 17 | 20 | 53 | 90 | ○ |
| | 17 | 17 | 1 | ○ | 17 | 20 | 53 | 90 | ○ |
| | 18 | 18 | 1 | ○ | 7 | -2 | 88 | 68 | ○ |
| | 19 | 19 | 1 | ○ | 28 | 21 | 59 | 91 | ○ |
| Examples **of** the inventions | 20 | 20 | 1 | ○ | 10 | -27 | 90 | 43 | ○ |
| | 21 | 21 | 1 | ○ | 28 | 21 | 84 | 91 | ○ |
| | 22 | 22 | 1 | ○ | 18 | 11 | 89 | 81 | ○ |
| | 23 | 23 | 1 | ○ | 11 | 4 | 91 | 74 | ○ |
| | 24 | 24 | 1 | ○ | 6 | -2 | 86 | 68 | ○ |
| | 25 | 25 | 1 | ○ | 5 | -1 | 86 | 69 | ○ |
| | 26 | 26 | 1 | ○ | 15 | 8 | 76 | 78 | ○ |
| | 27 | 27 | 1 | ○ | 28 | -5 | 97 | 65 | ○ |
| | 28 | 28 | 1 | ○ | -44 | 29 | 34 | 99 | ○ |
| | 29 | 29 | 1 | ○ | 7 | 7 | 97 | 77 | ○ |
| | 30 | 30 | 1 | ○ | 10 | 5 | 95 | 75 | ○ |
| | 31 | 31 | 1 | ○ | 29 | -17 | 85 | 53 | ○ |
| | 32 | 32 | 1 | ○ | -41 | 18 | 24 | 88 | ○ |
| | 33 | 33 | 1 | ○ | 15 | 1 | 91 | 71 | ○ |
| | 34 | 34 | 1 | ○ | 16 | -3 | 87 | 67 | ○ |
| | 35 | 35 | 1 | ○ | 9 | 2 | 90 | 72 | ○ |
| | 36 | 36 | 1 | ○ | 9 | 2 | 90 | 72 | ○ |
| | 37 | 37 | 1 | ○ | 9 | 2 | 90 | 72 | ○ |
| | 38 | 38 | 1 | ○ | 9 | 2 | 90 | 72 | ○ |
| | 39 | 14 | 2 | ○ | 6 | 9 | 97 | 54 | ○ |
| | 40 | 14 | 3 | ○ | -18 | -2 | 73 | 92 | ○ |
| | 41 | 14 | 4 | ○ | 4 | 9 | 95 | 54 | ○ |
| | 42 | 14 | 5 | ○ | -23 | 7 | 68 | 96 | ○ |
| | 43 | 14 | 6 | ○ | 23 | -29 | 98 | 31 | ○ |
| | 44 | 14 | 7 | ○ | 12 | 10 | 98 | 80 | ○ |
| | 45 | 14 | 8 | ○ | -18 | -7 | 68 | 87 | ○ |
| | 46 | 14 | 9 | ○ | 9 | 9 | 95 | 54 | ○ |

**Table 9-2 Evaluation results of Examples**

**Table 9-2**

| | **Miniature core No.** | **Header pipe No.** | **Tube No.** | **Braze Performance** | **Potential measurement (mV)** | | | | **Corrosion resistance** |
|---|---|---|---|---|---|---|---|---|---|
| | | | | | **Potential A** | **Potential B** | **Potential C** | **Potential D** | |
| | 47 | 39 | 1 | × | - | - | - | - | - |
| | 48 | 42 | 1 | ○ | 33 | 40 | 50 | 110 | × |
| | 49 | 44 | 1 | ○ | -80 | 55 | 47 | 125 | × |
| | 50 | 46 | 1 | × | - | - | - | - | - |
| | 51 | 47 | 1 | ○ | 60 | 32 | 58 | 102 | × |
| | 52 | 48 | 1 | ○ | 53 | -45 | 64 | 25 | × |
| **Compara**tive **Examples** | 53 | 49 | 1 | ○ | -26 | 105 | 102 | 175 | × |
| | 54 | 50 | 1 | × | - | - | - | - | - |
| | 55 | 14 | 10 | × | - | - | - | - | - |
| | 56 | 14 | 13 | ○ | 30 | 18 | 121 | 46 | × |
| | 57 | 14 | 16 | × | - | - | - | - | - |
| | 58 | 14 | 17 | ○ | -8 | 15 | 83 | 25 | × |
| | 59 | 14 | 19 | ○ | 92 | -45 | 183 | 90 | × |
| | 60 | 14 | 20 | × | - | - | - | - | - |
| | 61 | 14 | 22 | ○ | 37 | 20 | 128 | 45 | × |

From the results of Table 9-1, in all of No. 1-46 (Examples of the inventions) in which both the header pipe and the tube fill the composition range defined in the present invention, potential A and potential B were 30 mV or less, potential C and potential D were within a range of 30-100 mV, and braze performance and corrosion resistance were preferable.

In contrast, from the results of Table 9-2, among No. 47-54 (Comparative Examples) in which the header pipe was out of the composition range defined in the present invention, No 48, 49 and 51-53 showed that at least one of potential A to potential D was out of the range defined in the present invention, and all results of the corrosion resistance test were failing grades. In addition, in No. 47, 50 and 54, measurement of the potential and evaluation of the corrosion resistance could not be carried out because the heat exchanger could not manufactured.

In addition, among No. 55-61 (Comparative Examples) in which the tube was out of the composition range defined in the present invention, No 56, 58, 59 and 61 showed that at least one of potential A to potential D was out of the range defined in the present invention, and all results of the corrosion resistance test were failing grades. In addition, in No. 55, 57 and 60, measurement of the potential and evaluation of the corrosion resistance could not be carried out because the heat exchanger could not manufactured.

Although the embodiment of the present invention was explained as mentioned above, this embodiment was presented as an example and is not intended to limit the scope of the invention. This embodiment can be carried out in other various forms, and various omissions, replacements and changes can be given without departing from the scope of the invention. This embodiment and its variations are included in the inventions in claims and an equivalent scope like that they are included in the scope and the gist of the invention.

### INDUSTRIAL APPLICABILITY

The heat exchanger of the present invention has excellent corrosion resistance on the header pipe, the tube and the brazed portion, and is preferable as a heat exchanger for an air conditioner used particularly under a corrosive environment.

### REFERENCE NUMERALS

1. Heat exchanger
2. Tube
2a. Tube core material
2b. Tube braze-functionalized sacrificial anode material
3. Fin
4. Header pipe
4a. Header pipe core material
4b. Header pipe sacrificial anode material
4b'. Header pipe braze-functionalized sacrificial anode material
4c. Header pipe brazing material
5. Joint section between the header pipe and the tube
α. Position in a depth of one quarter of the overall thickness from the header pipe surface
β. Position in a depth of one quarter of the overall thickness from the tube surface

## Claims

1. An aluminum alloy heat exchanger, wherein
a plurality of tubes comprising fluid passages therein are arranged in parallel to each other,
a corrugated fin is sandwiched between the adjacent tubes,
header pipes are arranged on both ends of the tubes, and
the tubes, the fins and the header pipes are integrated by brazing,
wherein:
the header pipe is composed of an aluminum alloy cladding material comprising an aluminum alloy core material and a sacrificial anode material for cladding at least one side of the core material;
the core material contains Mn: 0.3-2.0 mass% (hereinafter, abbreviated to %), Si: 1.5% or less, Fe: 0.1-1.0% and Cu: 0.05-1.0%, and comprises a remainder Al and unavoidable impurities;
the sacrificial anode material contains Fe: 0.05-1.0% and Zn: 0.5-5.0%, and comprises a remainder Al and unavoidable impurities;
a potential at the joint section between the header pipe and the tube is lower by 30 mV or less than potentials at the header pipe surface and the tube surface; and
the potential at the joint section is lower by 30-100 mV than a potential at a position in a depth of one quarter of the overall thickness from the header pipe surface and a potential at a position in a depth of one quarter of the overall thickness from the tube surface.

2. The aluminum alloy heat exchanger according to claim 1, wherein:
a braze-functionalized sacrificial anode material is used instead of the sacrificial anode material; and
the braze-functionalized sacrificial anode material contains Si: 2.5-15.0%, Fe: 0.05-1.0% and Zn: 0.5-5.0%, and comprises a remainder Al and unavoidable impurities.

3. The aluminum alloy heat exchanger according to claim 1 or 2, wherein the alloy component of the core material of the header pipe further contains one or more selected from Mg: 0.1-1.0%, Ti: 0.05-0.3%, Zr: 0.05-0.3%, Cr: 0.05-0.3%, and V: 0.05-0.3%.

4. The aluminum alloy heat exchanger according to any one of claims 1-3, wherein the alloy component of the sacrificial anode material or the braze-functionalized sacrificial anode material further contains one or more selected from Mn: 0.05-1.0%, Ti: 0.05-0.3%, Zr: 0.05-0.3%, Cr: 0.05-0.3%, V: 0.05-0.3%, Na: 0.001-0.05% and Sr: 0.001-0.05%.

5. The aluminum alloy heat exchanger according to any one of claims 1-4, wherein:
the core material on the side opposite to a surface on which the header pipe core material is cladded with the sacrificial anode material of the header pipe or the braze-functionalized sacrificial anode material is cladded with a brazing material; and
the brazing material contains Si: 2.5-15.0%, Fe: 0.05-1.0%, further contains one or more selected from Mn: 0.05-1.0%, Ti: 0.05-0.3%, Zr: 0.05-0.3%, Cr: 0.05-0.3%, V: 0.05-0.3%, Na: 0.001-0.05% and Sr: 0.001-0.05%, and comprises a remainder Al and unavoidable impurities.

6. The aluminum alloy heat exchanger according to any one of claims 1-5, wherein the header pipe is an electric resistance welded tube processed by electric resistance welding.

7. The aluminum alloy heat exchanger according to any one of claims 1-5, wherein the header pipe is an extruded tube processed by extrusion of aluminum.

8. The aluminum alloy heat exchanger according to any one of claims 1-7, wherein:
the tube is composed of the aluminum alloy cladding material comprising the aluminum alloy core material and the braze-functionalized sacrificial anode material for cladding at least one side of the core material;
the core material contains Mn: 0.5-2.0%, Si: 1.5% or less, Fe: 0.1-1.0%, Cu: 0.1-1.0%, further contains one or more selected from Mg: 0.1-1.0%, Ti: 0.05-0.3%, Zr: 0.05-0.3%, Cr: 0.05-0.3%, and V: 0.05-0.3%, and comprises a remainder Al and unavoidable impurities; and
the braze-functionalized sacrificial anode material contains Si: 2.5-15.0%, Fe: 0.05-1.0%, Zn: 0.5-5.0%, further contains one or more selected from Mn: 0.05-1.0%, Ti: 0.05-0.3%, Zr: 0.05-0.3%, Cr: 0.05-0.3%, V: 0.05-0.3%, Na: 0.001-0.05% and Sr: 0.001-0.05%, and comprises a remainder Al and unavoidable impurities.

9. The aluminum alloy heat exchanger according to any one of claims 1-7, wherein:
the tube is composed of the aluminum alloy core material and a Zn thermal spraying material formed on a surface of the core material; and
the core material contains Si: 1.5% or less, Fe: 0.1-1.0%, Cu: 0.1-1.0%, further contains one or more selected from Mg: 0.1-1.0%, Ti: 0.05-0.3%, Zr: 0.05-0.3%, Cr: 0.05-0.3%, and V: 0.05-0.3%, and comprises a remainder Al and unavoidable impurities.
